# EUROPÄISCHE PATENTSCHRIFT

(11) **EP 1 339 767 B1**
(45) Veröffentlichungstag und Bekanntmachung des Hinweises auf die Patenterteilung: **06.08.2008**
(21) Anmeldenummer: 01996569.8
(22) Anmeldetag: 05.11.2001
(51) Int. Cl.: C08G 12/42

(54) **AUS DER SCHMELZE VERARBEITBARES AMINOHARZ AUF BASIS VON 1,3,5-TRIAZINEN UND ALDEHYDEN**
MELT PROCESSABLE AMINO RESIN BASED ON 1,3,5-TRIAZINES AND ALDEHYDES
RESINE AMINIQUE POUVANT ETRE TRAVAILLEE EN FUSION, A BASE DE 1,3,5-TRIAZINES ET D'ALDEHYDES

(30) Priorität: 14.11.2000 DE 10056398
(43) Veröffentlichungstag der Anmeldung: 03.09.2003
(73) Patentinhaber: Fraunhofer-Gesellschaft zur Förderung der angewandten Forschung e.V., 80686 München (DE)
(72) Erfinder: BÖRNER, Frank, 12203 Berlin (DE); RAFLER, Gerald, 14473 Potsdam (DE); BONATZ, Eckhard, 14513 Teltow (DE)
(86) Internationale Anmeldenummer: PCT/EP2001/012789
(87) Internationale Veröffentlichungsnummer: WO 2002/040564

(56) Entgegenhaltungen:
- US-A- 2 808 389
- PATENT ABSTRACTS OF JAPAN vol. 002, no. 067 (C-013), 20. Mai 1978 (1978-05-20) & JP 53 019425 A (ASAHI CHEM IND CO LTD), 22. Februar 1978 (1978-02-22)

## Beschreibung

Die Erfindung betrifft ein verethertes Aminoharz auf Basis von 1,3,5-Triazinen und Aldehyden (im folgenden als Aminoharz bezeichnet) mit einem Erweichungspunkt oberhalb von 100°C und seine thermoplastanaloge Weiterverarbeitung zu Fasern, Folien, Werkstücken bzw. seinen Einsatz in thermoplastisch verarbeitbaren Beschichtungssystemen.

### Hintergrund der Erfindung

Melaminbasierte Aminoharze sind vielfältig einsetzbare Netzwerkpolymere mit hohem E-Modul. Sie unterliegen bei der Aushärtung nur einer geringen Schrumpfung. Die ausgehärteten Materialien sind zwar mechanisch sehr stabil, aber infolge ihrer chemischen Struktur auch sehr spröde.

Die ausgehärteten Aminoharze sind unschmelzbar, und sie werden deshalb in Form von löslichen niedermolekularen Prepolymeren eingesetzt, die nach der Formgebung zum Netzwerkpolymeren ausgehärtet werden. Diese Form der Verarbeitung bedingt ihren bevorzugten Einsatz bei der Herstellung von Kompositwerkstoffen sowie in Beschichtungssystemen. Typische Anwendungen finden sich bei der Laminatherstellung, der Papierbeschichtung, der Verkapselung von Flüssigkeiten und Feststoffen, oder in Kombination mit Alkydharzen bei hochwertigen Lacksystemen.

Während die methylveretherten Aminoharze bei der Verarbeitung meist als Flüssigkeiten eingesetzt werden, können unveretherte Produkte auch als trockene Pulver nach Lösungsmittelzusatz verarbeitet werden.

Die herkömmlichen Melamin-Formaldehyd-Festharze sind unverethert und werden durch Aufnahme von Luftfeuchtigkeit klebrig. Unveretherte Melamin-Formaldehyd-Harze reagieren bereits bei Raumtemperatur.

Neben den hochtonnagigen Anwendungen von Melamin-Formaldehyd-Materialien sind auch spezielle Applikationen für diese Aminoharze bekannt, beispielsweise bei der Herstellung von Fasern für schwerentflammbare Textilien im Bereich von Schutzbekleidungen. So wird in der DE-OS 2 364 091 ein Verfahren zur Herstellung von Melaminharzfasern beschrieben, in dem eine wäßrige Lösung durch eine Düse in einen Heißluftstrom gepreßt und beim Trocknen ausgehärtet wird. Aufgrund des Herstellungsverfahrens weisen diese Fasern einsatzlimitierende Durchmesser- und Fadenlängenverteilung auf (H. Berber, Chemiefasern 37 (1994), T125-T127).

Die kommerziell für Feuerschutzkleidung hergestellte Melaminharzfaser BASOFIL™ wird gemäß US 5084488 durch ein Rotationsspinnverfahren erhalten.

Darüber hinaus sind auch Aminoharzgranulate auf Basismaterialien wie Papierbrei und Holzmehl bekannt (JP-A2-56030433).

Es ist weiterhin bekannt, daß veretherte Melamin-Formaldehyd-Prekondensate bei Raumtemperatur oder mäßig erhöhter Temperatur in Gegenwart saurer Katalysatoren zu einem nichtschmelzbaren Netzwerkpolymeren aushärten können. Nach partieller Hydrolyse der Methoxygruppen kondensieren die gebildeten Methylole zu den vernetzten Polymeren. Bei der Aushärtung bildet sich unter normalen Bedingungen zunächst eine Gelphase. In dieser Gelphase vernetzt ein Teil der Produkte. Der auf diesem Weg realisierte Vernetzungsgrad determiniert die Harzeigenschaften. In der Technik werden diese ausgehärteten Harze als Zusätze für Melaminharze verwendet, um den auftretenden Masseverlust bei der Kondensation zu reduzieren und damit die Schrumpfung gering zu halten.

Das US Patent 2,808,389 beschreibt ein Verfahren zur Herstellung von schmelzbaren, Alkohol-modifizierten Melaminharzen und die dadurch erhaltenen Produkte. Das Verfahren besteht aus folgenden Stufen: (1) Kondensieren von Formaldehyd und Melamin im Verhältnis von mindestens 6 Mol Formaldehyd pro Mol Melamin durch Erhitzen dieser Ausgangsstoffe in einer wässrigen Lösung, die einen niedermolekularen einwertigen aliphatischen Alkohol enthält und teilweises Dehydratisieren der Lösung, wobei der pH-Wert bei mindestens 8,5 gehalten wird, (2) Verethern des Kondensationsprodukts durch Ansäuern und (3) vollständiges Dehydratisieren der Lösung durch fortgesetzte Einwirkung von Wärme.

### Beschreibung der Erfindung

Der Erfindung liegt die Aufgabe zugrunde, ein in der Schmelze nicht aushärtendes Aminoharz bereitzustellen, das durch Schmelzen in eine beliebige Faden-, Flächen- oder dreidimensionale Form überführt werden kann, die nach Formgebung ausgehärtet wird.
Diese Aufgabe wird erfindungsgemäß gelöst, durch veretherte Aminoharze, die erhältlich sind durch:
(a) Umsetzen eines 2,4-Diamino-1,3,5-Triazins oder eines Gemisches von 2,4-Diamino-1,3,5-Triazinen der folgenden allgemeinen Formel (I) 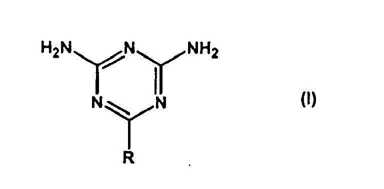 worin R für NH₂, OH, C₁- bis C₁₂-Alkyl oder substituiertes oder unsubstituiertes Phenyl steht,
   mit einem Aldehyd, der 1 bis 12 Kohlenstoffatome und eine oder mehrere Aldehydgruppen enthält, um ein unverethertes Aminoharz zu erhalten, und
(b) Umsetzen des in der Stufe (a) erhaltenen unveretherten Aminoharzes mit einem Alkohol mit 1 bis 12 Kohlenstoffatomen und
(c) Vorhärten des in der Stufe (b) erhaltenen veretherten Aminoharzes bei Temperaturen von 160 bis 200°C, wobei mehr als 90% der Methylolgruppen abgespalten werden.

In der oben genannten Formel (I) kann der Rest R für NH₂, OH, eine Alkylgruppe mit 1 bis 12 Kohlenstoffatomen oder eine substituierte oder unsubstituierte Phenylgruppe stehen. Geeignete Substituenten für die Phenylgruppe sind Alkyl-, Alkoxygruppen und Halogene.

Im Rahmen der vorliegenden Erfindung bedeutet eine Alkylgruppe einen geradkettigen oder verzweigten Kohlenwasserstoffrest mit 1 bis 12, vorzugsweise 1 bis 5, Kohlenstoffatomen.

Unter Alkoxygruppen werden Reste der allgemeinen Formel OCₙH₂ₙ₊₁ verstanden, worin n für eine natürliche Zahl von 1 bis 12, vorzugsweise 1 bis 5, steht.

Geeignete Halogene sind Fluor, Chlor, Brom und Iod.

Bei der Durchführung der oben beschriebenen Stufe (a) wird ein 1,3,5-Triazin der Formel (I) bzw. ein Gemisch von unter diese Formel fallenden 1,3,5-Triazinen mit einem oder mehreren Aldehyden bei einer Temperatur im Bereich von 20-100°C und vorzugsweise 40-70°C umgesetzt. Der verwendete Aldehyd umfasst 1 bis 12 Kohlenstoffatome und bis zu 3 CHO-Gruppen. Bevorzugte Aldehyde sind Formaldehyd, Glutaraldehyd und Glyoxal.

Das Stoffmengenverhältnis von Triazin zu Aldehyd beträgt dabei im allgemeinen 1:1 bis 1:3 und vorzugsweise 1:2. Produkte der Stufe (a) sind zum Teil kommerziell erhältlich und werden z.B. unter dem Handelsnamen Lamelite^{™} vertrieben.

Das gemäß Stufe (a) erhaltene unveretherte Aminoharz wird in Stufe (b) mit einem Alkohol mit 1 bis 12 Kohlenstoffatomen, vorzugsweise 1 bis 5, ganz besonders bevorzugt 1 bis 3 Kohlenstoffatomen, umgesetzt. Die Umsetzung erfolgt bei einer Temperatur von 10-60°C und vorzugsweise 20-40°C

Das Gewichtsverhältnis von Alkohol zu unverethertem Aminoharz beträgt im allgemeinen 5:1 und vorzugsweise 2:1. Als Alkohole werden vorzugsweise Methanol, Ethanol und Propanol eingesetzt.

Zweckmäßigerweise wird dabei ein Katalysator eingesetzt. Als Katalysator eignen sich starke Mineralsäuren, insbesondere Salzsäure.

Gemäß einer bevorzugten Ausführungsform wird in Stufe (b) ein unverethertes Aminoharz eingesetzt, dessen NH-Gruppen mit einem oder mehreren Stoffen, ausgewählt aus der Gruppe bestehend aus Harnstoff, Guanidin, Guanidiniumsalzen, gesättigten und ungesättigten Amiden, modifiziert worden sind. Diese Modifizierung kann direkt bei der Synthese des unveretherten Aminoharzes durch Zugabe der Modifizierungskomponente zu dem Triazin/Aldehyd-Reaktionsgemisch oder in einem separaten Syntheseschritt durchgeführt werden, wobei die eigentliche CoKondensation dann während und nach der Veretherung erfolgt. Geeignete Guanidiniumsalze sind beispielsweise Guanidiniumhalogenide oder -sulfat.

Die als Modifizierungsmittel weiterhin verwendeten Amide sind Phenyl-, gesättigte und ungesättigte Alkylamide und vorzugsweise Maleinsäurediamid, Acrylamid und Acetamid.

Das nach Veretherung erhaltene Aminoharz wird anschließend bei Temperaturen von 160 bis 200°C, vorzugsweise 160 bis 180°C weiterbehandelt ("Vorhärtung"). Die Vorhärtung findet zweckmäßigerweise in Apparaten hoher Durchmischungsintensität und/oder hoher Verdampfungskapazität statt. Zu nennen sind Ein- oder Zweischneckenextruder, Kneter oder Dünnschichtverdampfer. Besonders bevorzugt sind Extruder und Dünnschichtverdampfer. Solche Geräte sind dem Fachmann an sich bekannt und beispielsweise in Ch. Rauwendaal: "Polymer Extrusion", Carl Hanser Verlag (1994) beschrieben.

Die Verweilzeit, d.h. Dauer der Vorhärtung, beträgt im allgemeinen 1 bis 30 min und vorzugsweise 5 bis 10 min.

Durch diese Vorhärtung wird ein Harz erhalten, das nicht mehr klebrig ist und einen Erweichungspunkt oberhalb von 100°C aufweist.

Durch die Vorhärtung werden mehr als 90%, vorzugsweise mehr als 95%, der Methylolgruppen entfernt bzw. abgespalten, so dass diese mittels NMR-Spektroskopie nicht mehr nachweisbar sind.

Durch die Vorhärtung wird das Harz nicht ausgehärtet, d.h. es bleibt schmelzbar und löslich.

Das erfindungsgemäße Aminoharz wird zweckmäßigerweise durch verschiedene Maßnahmen stabilisiert. Gemäß einer Ausführungsform erfolgt die Stabilisierung des Harzes durch Einstellen des pH-Wertes auf 6,5 bis 9, vorzugsweise 7 bis 8. Diese Einstellung des pH-Wertes wird vorgenommen, indem dem Reaktionsgemisch nach der Veretherung und vor der Vorhärtung eine Lösung einer Base in Methanol (z.B. Natriumhydroxid oder Kaliumhydroxid) zugefügt wird. Zur Bestimmung des pH-Wertes wird nach Zugabe der vorgenannten Komponenten ein pH-Papier mit dem Harz benetzt und mit einem Wasserfilm überschichtet.

Eine weitere Maßnahme, die der Stabilisierung des Harzes dient, ist das Entsalzen in Alkoholen, insbesondere in Butanol, mit anschließender Filtration des alkoholischen Aminoharz/Salz-Gemisches. Dabei wird das Harz mit dem Alkohol versetzt und durchmischt und dann gewartet, bis sich unlösliche Salze abgeschieden haben. Diese Salze werden dann durch Filtration entfernt.

Gemäß einer bevorzugten Ausführungsform erfolgt die zur Stabilisierung dienende Reinigung durch Schmelzfiltration bei einer Temperatur von 100 bis 200°C, vorzugsweise 140°C. Die Schmelzfiltration ist dem Fachmann an sich bekannt.

Die erfindungsgemäßen vorgehärteten Aminoharze lassen sich in Gegenwart saurer Gase, Flüssigkeiten oder Feststoffe und/oder bei Temperaturen oberhalb von 240°C zu unlöslichen und unschmelzbaren Produkten aushärten. Die erfindungsgemäßen Harze können insbesondere zur Herstellung von Fibriden, Fasern, Folien, Mehrschichtfolien oder Formteilen verwendet werden.

Eine unter Verwendung der erfindungsgemäßen vorgehärteten Aminoharze hergestellte Mehrschichtfolie, kann insbesondere dazu verwendet werden, einen feuerhemmenden, nicht schmelzbaren Überzug zu bilden, indem man die Mehrschichtfolie auf ein Substrat aufbringt und aufschmilzt. Ein solcher Überzug kann auch gebildet werden, indem man das erfindungsgemäße vorgehärtete Harz pulverisiert bzw. granuliert, als Pulver bzw. Granulät auf das Substrat aufbringt und aufschmilzt.

Die erfindungsgemäßen vorgehärteten, veretherten Aminoharze weisen eine Reihe materialwirtschaftlicher und verarbeitungstechnischer Vorteile auf, die im folgenden dargestellt werden.

Sie sind mechanisch stabil, gut handhabbar und infolge geringer Netzwerkdichte vollständig in Dimethylsulfoxid (DMSO) löslich und können damit vor der weiteren Verarbeitung besonders sicher aus Lösung analysiert werden.

Insbesondere wenn der pH-Wert zwischen 7 und 9 gehalten wird, sind diese Harze thermisch weitgehend stabil, und sie können auch bei höheren Temperaturen von 130°C bis 150°C problemlos zu Fäden, Folien oder Formteilen verformt werden.

Im Gegensatz zu den bekannten Verfahren zur Herstellung von Melaminharzfasern (DE-OS 2 364 091, US-PS 5 084 488), bei denen aus wässrigen Lösungen gearbeitet wird, können mit den erfindungsgemäß hergestellten Aminoharzen Fasern aus Schmelze ohne Einsatz von fadenbildenden Hilfspolymeren ersponnen werden. Diese Triazinharzfaser wird nicht bei der Verarbeitung, sondern anschließend an die Formgebung zunächst sauer an der Faseroberfläche vorgehärtet und dann thermisch im Gesamtvolumen nachgehärtet. Die durch Schmelzspinnen auf die beschriebene Weise hergestellten Fasern sind durch einheitliche Durchmesser gekennzeichnet, und es ist möglich, Endlosfäden zu erspinnen.

Die Elastizität der erfindungsgemäßen Triazinharzprodukte kann durch Zusätze von Benzoguanaminharzen oder Ammelinharzen gezielt beeinflußt werden.

Die Aushärtung der erfindungsgemäßen Harze ist nur von einem relativ geringen Masseverlust begleitet, so dass diese Harze ggf. unter Zusatz partikulärer Additive in Mengen bis zu 60 Masse-% neben der Verspinnung auch zur Verarbeitung mittels weiterer thermoplastischer Formgebungsverfahren, wie Profilextrusion oder Thermopressen befähigt sind.

Dadurch, daß die erfindungsgemäßen Harze nicht kleben, können sie sowohl in Pulverform als auch in Granulate überführt werden.

### Beispiele

Die Erfindung wird durch die folgenden Beispiele näher erläutert:

### Beispiel 1 (Herstellung eines erfindungsgemäßen Harzes) :

### (1) Veretherung eines Melamin-Formaldehyd-Festharzes:

9 1 Methanol werden bei 33,6°C mit 200 ml konz. HCl (37%) versetzt. Dann werden 3 kg eines Trimethylolmelamins (Kondensationsprodukt aus 1 Teil Melamin und 2 Teilen einer 36 %igen wässrigen Formaldehydlösung) innerhalb von 30 min. zugegeben. Die Temperatur steigt zwischenzeitlich auf 35,6°C an. 30 min. nach Zugabe lag die Reaktortemperatur wieder bei 33,6°C. Nach weiteren 50 min. wird mit KOH in Methanol neutralisiert (pH 8-9) und ca. 7 1 Methanol werden bei 250 mbar (60°C Manteltemperatur) abdestilliert. Nach Zugabe von 2 1 Butanol wird 2 h gewartet, bis sich die Salze abgesetzt haben, bevor nach Filtration über ein Stofftuch das Harz weiter eingeengt wird, bis es eine Viskosität von ca. 500 Poise bei 30°C hat.

### (2) Vorhärtung im Extruder:

Das in der Stufe (1) erhaltene Harz wird in einem gleichlaufenden Zweischneckenextruder bei einer Temperatur zwischen 160 und 185°C sowohl getrocknet als auch vorgehärtet. Die Verweilzeit im Extruder liegt in einem Intervall von 5 bis 15 min. Nicht umgesetzte Methylolgruppen werden hierbei in Form von Formaldehyd abgespalten. Der Erweichungspunkt des so erhaltenen, vorgehärteten Harzes liegt bei ca. 100°C. Bei ca. 140°C ist dieses Harz dünnflüssig.

Eine Probe des Harzes gelöst in Dimethylsulfoxid-d₆ wird durch ¹³C-NMR-Spektroskopie untersucht. In dem Spektrum sind keine Methylolgruppen mehr nachweisbar.

### Beispiel 2 (Überführung in Granulatform):

Das Harz aus Beispiel 1 wird bei 145°C im Extruder aufgeschmolzen und anschließend durch eine Düse als Strang erhalten, der durch einen Granulator in Granulatform überführt wird.

### Beispiel 3 (Verformung zu einer Melaminharzfaser):

5 g Harz aus Beispiel 1 werden bei 145°C aufgeschmolzen und durch einen Spritzendosierer langsam durch eine Kanüle gepreßt. Der erste Tropfen fällt in ein Spinnrad und wird gleichmäßig über ca. 2 h abgezogen. Nach Formgebung wird der Faden zunächst 14 h über HCl-Spuren bei Raumtemperatur gelagert, um dann bei 180°C 2 h im Vakuum getempert zu werden. Die Fäden hatten eine gelbliche Verfärbung.

**Materialeigenschaften:**

| | |
|---|---|
| E-Modul | 500-550 cN/Tex |
| Zugfestigkeit | 5-10 cN/Tex |
| Dehnung | 1,3-2,0 % |

### Beispiel 4 (Herstellung einer benzoguanamin-modifizierten Melaminharzfasern) :

### (1) Herstellung eines Benzoguanamin-Formaldehyd-Harzes:

50 g (0,267 mol) Benzoguanamin werden in 107 g (1,1 mol) 30%igem Formaldehyd ca. 3 h gekocht, bis sich das Guanamin klar gelöst hat. Dann werden 500 ml Methanol und 2 ml konz. HCl bei Raumtemperatur zugesetzt. Nach 1 h wird mit KOH (gelöst in Methanol) neutralisiert und das Lösungsmittel verdampft.

### (2) Herstellung einer benzoguanamin-modifizierten Melaminfaser

4 g des Harzes aus Beispiel 1 werden mit 1 g des unter (1) hergestellten Guanaminharzes vermischt, bei 145°C aufgeschmolzen und analog Beispiel 4 durch einen Spritzendosierer langsam durch eine Kanüle gepreßt. Der erste Tropfen fällt in ein Spinnrad und wird gleichmäßig über ca. 2 h abgezogen. Nach Formgebung wird der Faden zunächst 12 h über HCl-Spuren bei Raumtemperatur gelagert, um dann bei 180°C 2 h im Vakuum getempert zu werden.

**Materialeigenschaften:**

| | |
|---|---|
| E-Modul | 480-540 cN/Tex |
| Zugfestigkeit | 9-15 cN/Tex |
| Dehnung | 1,7-2,2 % |

## Patentansprüche

1. Verethertes 2,4-Diamino-1,3,5-Triazin-Aldehyd-Harz erhältlich durch:
(a) Umsetzen eines 2,4-Diamino-1,3,5-Triazins oder eines Gemisches von 2,4-Diamino-1,3,5-Triazinen der folgenden allgemeinen Formel (I) 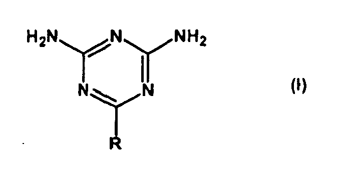 worin R für NH₂, OH, C₁- bis C₁₂-Alkyl oder substituiertes oder unsubstituiertes Phenyl steht,
mit einem Aldehyd, der 1 bis 12 Kohlenstoffatome und eine oder mehrere Aldehydgruppen enthält, um ein unverethertes 2,4-Diamino-1,3,5-Triazin-Aldehyd-Harz zu erhalten, und
(b) Umsetzen des in der Stufe (a) erhaltenen 2,4-Diamino-1,3,5-Triazin-Aldehyd-Harzes mit einem Alkohol mit 1 bis 12 Kohlenstoffatomen und
(c) Vorhärten des in der Stufe (b) erhaltenen 2,4-Diamino-1,3,5-Triazin-Aldehyd-Harzes bei Temperaturen von 160 bis 200°C,
wobei mehr als 90% der Methylolgruppen abgespalten werden.

2. 2,4-Diamino-1,3,5-Triazin-Aldehyd-Harz nach Anspruch 1, **dadurch gekennzeichnet, dass** in der Stufe (b) ein unverethertes 2,4-Diamino-1,3,5-Triazin-Aldehyd-Harz eingesetzt worden ist, dessen NH-Gruppen mit einem oder mehreren Stoffen ausgewählt aus der Gruppe bestehend aus Harnstoff, Guanidin, Guanidiniumsalzen, Amiden gesättigter und ungesättigter Carbonsäuren mit 1 bis 5 Kohlenstoffatomen modifiziert worden sind.

3. 2,4-Diamino-1,3,5-Triazin-Aldehyd-Harz nach einem der Ansprüche 1 oder 2, **dadurch gekennzeichnet, dass** der in der Stufe (a) verwendete Aldehyd Formaldehyd, Glutaraldehyd oder Glyoxal ist.

4. 2,4-Diamino-1,3,5-Triazin-Aldehyd-Harz nach einem der Ansprüche 1 bis 3, **dadurch gekennzeichnet, dass** es durch Einstellen des pH-Wertes auf 6,5 bis 9, insbesondere 7 bis 8, stabilisiert worden ist.

5. 2,4-Diamino-1,3,5-Triazin-Aldehyd-Harz nach einem der Ansprüche 1 bis 4, **dadurch gekennzeichnet, dass** es durch Entsalzen in Alkoholen, insbesondere n-Butanol, und anschließende Filtration stabilisiert worden ist.

6. 2,4-Diamino-1,3,5-Triazin-Aldehyd-Harz nach einem der Ansprüche 1 bis 5, **dadurch gekennzeichnet, dass** es durch Schmelzfiltration bei 100 bis 200°C gereinigt worden ist.

7. Verfahren zur Herstellung veretherter 2,4-Diamino-1,3,5-TriazinAldehyd-Harze nach Anspruch 1, umfassend die folgenden Stufen:
(a) Umsetzen eines 2,4-Diamino-1,3,5-Triazins oder eines Gemisches von 2,4-Diamino-1,3,5-Triazinen der folgenden allgemeinen Formel (I) 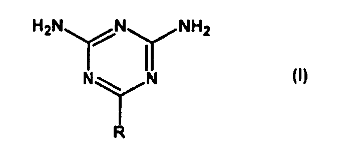 worin R für NH₂, OH, C₁- bis C₁₂-Alkyl oder substituiertes oder unsubstituiertes Phenyl steht,
mit einem Aldehyd, der 1 bis 12 Kohlenstoffatome und eine oder mehrere Aldehydgruppen enthält, um ein unverethertes 2,4-Diamino-1,3,5-Triazin-Aldehyd-Harz zu erhalten, und
(b) Umsetzen des in der Stufe (a) erhaltenen unveretherten 2,4-Diamino-1,3,5-Triazin-Aldehyd-Harzes mit einem Alkohol mit 1 bis 12 Kohlenstoffatomen und
(c) Vorhärten des in der Stufe (b) erhaltenen veretherten 2,4-Diamino-1,3,5-Triazin-Aldehyd-Harzes bei Temperaturen von 160 bis 200°C, wobei mehr als 90% der Methylolgruppen abgespalten werden.

8. Verfahren nach Anspruch 7, **dadurch gekennzeichnet, dass** das Vorhärten in Apparaten hoher Durchmischungsintensität und/oder hoher Verdampfungskapazität durchgeführt wird.

9. Verfahren nach Anspruch 8, **dadurch gekennzeichnet, dass** als Apparate hoher Durchmischungsintensität und/oder hoher Verdampfungskapazität Ein- oder Zweischneckenextruder, Kneter, oder Dünnschichtverdampfer eingesetzt werden.

10. Verfahren zum Aushärten eines 2,4-Diamino-1,3,5-Triazin-Aldehyd-Harzes gemäß einem der Ansprüche 1 bis 6, **dadurch gekennzeichnet, dass** das Harz in Gegenwart saurer Gase, Flüssigkeiten oder Feststoffe und/oder bei Temperaturen oberhalb von 240°C zu einem unlöslichen und unschmelzbaren Produkt ausgehärtet wird.

11. Verwendung eines veretherten 2,4-Diamino-1,3,5-Triazin-Aldehyd-Harzes gemäß einem der Ansprüche 1 bis 6 zur Herstellung von Fibriden, Fasern, Folien, insbesondere Mehrschichtfolien oder Formteilen.

12. Verwendung einer gemäß der Verwendung nach Anspruch 11 erhaltenen Mehrschichtfolie zur Bildung eines feuerhemmenden, nicht schmelzbaren Überzugs, **dadurch gekennzeichnet, dass** man die Mehrschichtfolie auf ein Substrat aufbringt und aufschmilzt.

13. Verwendung eines veretherten 2,4-Diamino-1,3,5-Triazin-Aldehyd-Harzes gemäß einem der Ansprüche 1 bis 6 zur Herstellung feuerhemmender nicht schmelzbarer Schichten, **dadurch gekennzeichnet, dass** man das Harz pulverisiert, auf ein Substrat aufbringt und aufschmilzt.

## Claims

1. Etherified 2,4-diamino-1,3,5-triazine aldehyde resin that can be obtained by:
(a) converting a 2,4-diamino-1,3,5-triazine or a mixture of 2,4-diamino-1,3,5-traizines of the following general formula (1) 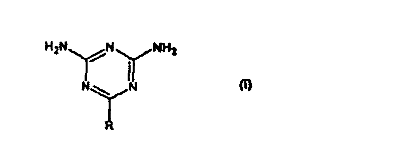 wherein R stands for NH, OH, C₁- to C₁₂-alkyl or substituted or non-substituted phenyl,
with an aldehyde containing 1 to 12 carbon atoms and one or more aldehyde groups in order to obtain a non-etherified 2,4-diamino-1,3,5-triazine aldehyde resin, and
(b) converting the 2,4-diamino-1,3,5-triazine aldehyde resin obtained in step (a) with an alcohol with 1 to 12 carbon atoms, and
(c) precuring the 2,4-diamino-1,3,5-triazine aldehyde resin obtained in step (b) at temperatures from 160° to 200°C, wherein more than 90% of the methylol groups are split off.

2. 2,4-diamino-1,3,5-triazine aldehyde resin according to claim 1, **characterised in that** a non-etherified 2,4-diamino-1,3,5-triazine aldehyde resin, in which the NH groups had been modified with one or more substances selected from the group comprising urea, guanidine, guanidinium salts, amides of saturated and unsaturated carboxylic acids with 1 to 5 carbon atoms, was used in step (b).

3. 2,4-diamino-1,3,5-triazine aldehyde resin according to one of claims 1 or 2, **characterised in that** the aldehyde used in step (a) is formaldehyde, glutaraldehyde or glyoxal.

4. 2,4-diamino-1,3,5-triazine aldehyde resin according to one of claims 1 to 3, **characterised in that** it was stabilised by adjusting the pH value to 6.5 to 9, in particular 7 to 8.

5. 2,4-diamino-1,3,5-triazine aldehyde resin according to one of claims 1 to 4, **characterised in that** it was stabilised by desalting in alcohols, in particular n-butanol, and subsequent filtration.

6. 2,4-diamino-1,3,5-triazine aldehyde resin according to one of claims 1 to 5,
**characterised in that** it was purified by fusion filtration at 100° to 200°C.

7. Process for the production of etherified 2,4-diamino-1,3,5-triazine aldehyde resin according to claim 1 comprising the following steps:
(a) converting a 2,4-diamino-1,3,5-triazine or a mixture of 2,4-diamino-1,3,5-traizines of the following general formula (1) 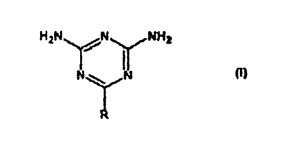 wherein R stands for NH₂, OH, C₁- to C₁₂-alkyl or substituted or non-substituted phenyl,
with an aldehyde containing 1 to 12 carbon atoms and one or more aldehyde groups in order to obtain a non-etherified 2,4-diamino-1,3,5-triazine aldehyde resin, and
(b) converting the 2,4-diamino-1,3,5-triazine aldehyde resin obtained in step (a) with an alcohol with 1 to 12 carbon atoms, and
(c) precuring the 2,4-diamino-1,3,5-triazine aldehyde resin obtained in step (b) at temperatures from 160° to 200°C, wherein more than 90% of the methylol groups are split off.

8. Process according claim 7, **characterised in that** the precuring is conducted in apparatuses of high mixing intensity and/or high evaporation capacity.

9. Process according to claim 8, **characterised in that** single- or double-screw extruders, kneaders or film evaporators are used as apparatuses of high mixing intensity and/or high evaporation capacity.

10. Process for curing a 2,4-diamino-1,3,5-triazine aldehyde resin according to one of claims 1 to 6, **characterised in that** the resin is cured in the presence of acid gases, liquids or solids and/or at temperatures above 240°C to form an insoluble and infusible product.

11. Use of an etherified 2,4-diamino-1,3,5-triazine aldehyde resin according to one of claims 1 to 6 for the production of fibrides, fibres, films, in particular multilayer films, or shaped parts.

12. Use of a multilayer film obtained by the use according to claim 11 for the formation of a fire-retardant non-meltable covering, **characterised in that** the multilayer film is applied and melted onto a substrate.

13. Use of an etherified 2,4-diamino-1,3,5-triazine aldehyde resin according to one of claims 1 to 6 for the production of fire-retardant non-meltable layers, **characterised in that** the resin is pulverised and applied and melted onto a substrate.

## Revendications

1. Résine 2,4-diamino-1,3,5-triazine-aldéhyde éthérifiée pouvant être obtenue par la mise en oeuvre des étapes suivantes :
(a) réaction d'une 2,4-diamino-1,3,5-triazine ou d'un mélange de 2,4-diamino-1,3,5-triazines de formule générale 1 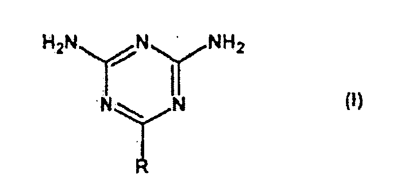 dans laquelle R représente NH2, OH, un alkyle en C₁ à C₁₂ ou un phényle substitué ou non substitué,
avec un aldéhyde qui renferme 1 à 12 atomes de carbone et un ou plusieurs groupes aldéhyde, pour obtenir une résine 2,4-diamino-1,3,5-triazine aldéhyde non éthérifiée, et
(b) réaction de la résine 2,4-diamino-1,3,5-triazine-aldéhyde obtenue à l'étape 1 avec un alcool ayant de 1 à 12 atomes de carbone, et
(c) prédurcissement de la résine 2,4-diamino-1,3,5-triazine-aldéhyde obtenue à l'étape (b) à des températures de 160°C à 200°C, plus de 90 % des groupes méthylol étant éliminés.

2. Résine 2,4-diamino-1,3,5-triazine-aldéhyde selon la revendication 1,
**caractérisée en ce que**
à l'étape (b), on a mis en oeuvre une résine 2,4-diamino-1,3,5-triazine-aldéhyde non éthérifiée dont les groupes NH ont été modifiés avec une ou plusieurs substances choisies dans le groupe constitué par l'urée, la guanidine, les sels de guanidium, les amides d'acides carboxyliques saturés et insaturés ayant de 1 à 5 atomes de carbone.

3. Résine 2,4-diamino-1,3,5-triazine-aldéhyde selon l'une des revendications 1 et 2,
**caractérisée en ce que** l'aldéhyde utilisé à l'étape (a) est du formaldéhyde, du glutaraldéhyde ou du glyoxal.

4. Résine 2,4-diamino-1,3,5-triazine-aldéhyde selon l'une des revendications 1 à 3,
**caractérisée en ce qu'**
elle a été stabilisée par réglage de la valeur du pH à 6,5 à 9, en particulier à 7 à 9.

5. Résine 2,4-diamino-1,3,5-triazine-aldéhyde selon l'une des revendications 1 à 4,
**caractérisée en ce qu'**
elle a été stabilisée par déminéralisation dans des alcools, en particulier le n-butanol puis par filtration.

6. Résine 2,4-diamino-1,3,5-triazine-aldéhyde selon l'une des revendications 1 à 5,
**caractérisée en ce qu'**
elle a été purifiée par filtration à l'état fondu à 100°C à 200°C.

7. Procédé d'obtention de résine 2,4-diamino-1,3,5-triazine-aldéhyde éthérifiée selon la revendication 1 comportant les étapes selon lesquelles :
(a) on fait réagir une 2,4-diamino-1,3,5-triazine ou un mélange de 2,4-diamino-1,3,5-triazines de formule générale 1 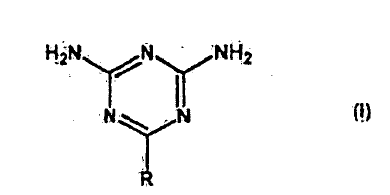 dans laquelle R représente NH2, OH, un alkyle en C₁ à C₁₂ ou un phényle substitué ou non substitué
avec un aldéhyde qui renferme 1 à 12 atomes de carbone et un ou plusieurs groupes aldéhyde pour obtenir une résine 2,4-diamino-1,3,5-triazine-aldéhyde non éthérifiée, et
(b) on fait réagir la résine 2,4-diamino-1,3,5-triazine-aldéhyde obtenue à l'étape (a) avec un alcool ayant de 1 à 12 atomes de carbone, et
(c) on prédurcit la résine 2,4-diamino-1,3,5-triazine-aldéhyde éthérifiée obtenue à l'étape (b) à des températures de 160°C à 200°C, plus de 90 % des groupes méthylol étant éliminés.

8. Procédé selon la revendication 7,
**caractérisé en ce que**
l'on met en oeuvre le prédurcissement dans des appareils à forte intensité de mélange et/ou à capacité de vaporisation élevée.

9. Procédé selon la revendication 8,
**caractérisé en ce qu'**
en tant qu'appareil à forte intensité de mélange et/ou à capacité de vaporisation élevée, on met en oeuvre une extrudeuse à une ou à deux vis, un malaxeur ou un vaporisateur à couche mince.

10. Procédé de durcissement d'une résine 2,4-diamino-1,3,5-triazine-aldéhyde selon l'une des revendications 1 à 6,
**caractérisé en ce que**
l'on durcit la résine en présence de gaz, liquides ou solides, acides et/ou à des températures supérieures à 240°C de façon à obtenir un produit non soluble et non fusible.

11. Utilisation d'une résine 2,4-diamino-1,3,5-triazine-aldéhyde éthérifiée selon l'une des revendications 1 à 6 pour l'obtention de fibrides, fibres, feuilles, en particulier de feuilles multicouches ou pièces moulées.

12. Utilisation d'une feuille multicouche obtenue selon l'utilisation conforme à la revendication 11 pour former un revêtement coupe-feu non fusible
**caractérisée en ce que**
l'on applique et fait fondre la feuille multicouche sur un substrat.

13. Utilisation d'une résine 2,4-diamino-1,3,5-triazine-aldéhyde éthérifiée selon l'une des revendications 1 à 6 pour l'obtention de couches coupe-feu non fusibles
**caractérisée en ce que**
l'on pulvérise la résine et on l'applique et la fait fondre sur un substrat.
